# EUROPEAN PATENT APPLICATION

(11) **EP 4 800 647 A1**
(43) Date of publication of application: **02.09.2026**
(21) Application number: 25160324.7
(22) Date of filing: 26.02.2025
(51) Int. Cl.: G06T 7/50, G06T 7/10

(54) **METHOD AND SENSOR ARRANGEMENT FOR GENERATING A GEOREFERENCED 3-DIMENSIONAL DIGITAL SURFACE MODEL**

(71) Applicant: Universität der Bundeswehr München, 85577 Neubiberg (DE)
(72) Inventor: PREXL, Jonathan, 81539 München (DE); SCHMITT, Michael, 85646 Anzing (DE); RECLA, Michael, 85635 Höhenkirchen-Siegertsbrunn (DE)
(74) Representative: Maiwald GmbH

(57) **Abstract**

The invention relates to a method for generating a georeferenced 3D digital surface model and/or a digital infrastructure segmentation map. The method comprises the steps: obtaining at least one remote sensing image captured by a remote sensing device, obtaining meta data for each one of the at least one remote sensing image from the remote sensing device, inputting the at least one remote sensing image and their corresponding meta data to an Al model trained with remote sensing training images along with meta training data related to respective training images, and processing the at least one remote sensing image and their corresponding meta data by the Al model, wherein the Al model generates the 3D georeferenced digital surface model and/or the digital infrastructure segmentation map.

## Description

### TECHNICAL FIELD

The invention relates to a method and a sensor arrangement for generating a georeferenced 3-dimensional (3D) digital surface model and/or a digital infrastructure segmentation map. Additionally, the invention relates to a method for training an Al model, a data processing apparatus, a computer program and a computer-readable storage medium.

### BACKGROUND OF THE INVENTION

For reconstructing a georeferenced 3D surface, techniques such as, stereo triangulation are used. Stereo triangulation is based on images captured from different views that contain the same landscape area. This requires a thorough planning and conduction of the flight mission, in particular to obtain stereo-capable image data with suitable baseline for the application. For example, two or more subsequent trajectories have to be flown over the same area using the same sensors, e.g. during an outward and return trip of a drone or an aircraft. Recently, machine learning methods have been developed for optical sensors to replace the need for stereo triangulation. The known techniques are limited to single image evaluation. These do not allow, for example, the filling of occlusions.

Therefore, these methods are cumbersome and inflexible.

### SUMMARY OF THE INVENTION

There may be a desire to provide a more flexible method for generating a georeferenced 3D digital surface model and/or a digital infrastructure segmentation map.

The problem is solved by the subject-matter of the independent claims. Embodiments are provided by the dependent claims, the following description, and the accompanying figures.

The described embodiments similarly pertain to the method for generating a georeferenced 3D digital surface model and/or a digital infrastructure segmentation map, the method for training an Al model, the data processing apparatus, the computer program, the computer-readable storage medium, and the sensor arrangement for generating a georeferenced 3D digital surface model and/or a digital infrastructure segmentation map. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

According to a first aspect, a method for generating a georeferenced 3D digital surface model and/or a digital infrastructure segmentation map is provided. The method comprises the steps:
obtaining at least one remote sensing image captured by a remote sensing device,
obtaining meta data for each one of the at least one remote sensing image from the remote sensing device,
inputting the at least one remote sensing image and their corresponding meta data to an Al (artificial intelligence) model, wherein the Al model has been trained with remote sensing training images along with meta training data related to respective training images,
processing the at least one remote sensing image and their corresponding meta data by the Al model,
wherein the Al model generates the 3D georeferenced digital surface model and/or digital infrastructure segmentation map.

In this context, obtaining is understood as receiving or determining. Moreover, an image is understood as image data.

The method may be performed by a data processing apparatus which has means to receive the image data and meta data, a memory, on which the Al model is stored, and processing means to execute the Al model.

Regarding the Al processing, the remote sensing images and training images are also referred to as acquisitions, such as SAR or camera acquisitions, or as "views" in this disclosure.

The obtained images are 2-dimensional (2D) images. As input to the Al model, one image is sufficient to generate a 3D georeferenced digital surface model and/or digital infrastructure segmentation map. Such a 3D georeferenced digital surface model is, for example, a map based on a pixel matrix with height information for every pixel. The height information relates to the surface of the earth and structures of the ground including elevations, buildings, trees, etc. The height of objects may be visualized in various views. Such a digital infrastructure segmentation map is, for example, a map based on a pixel matrix with a label value for each pixel, where the label value describes the nature of the object (e.g. building, road, tree etc.)

The input for the Al model is one or more images and associated meta data for these one or more images. The meta data is readily available and thus does not have to be extracted from the image or on basis of multiple images
This makes it possible to create the georeferenced 3D digital surface model and/or a digital infrastructure segmentation map with a single image but also with a sequence of images and to improve the surface model and/or the digital infrastructure segmentation map by using additional images.

The use of the Al model trained with remote sensing training images and meta training data that, for example, comprises capturing geometry data and further data, is preceded by providing an Al model and training the Al model with training data comprising a plurality of remote sensing images and meta data which are labelled. The images are captured by remote image sensing devices, which are also referred to as "sensors" in this disclosure.

The term "Al model" as used herein represents an Al architecture for machine learning.

According to an embodiment, the Al model is a deep neural network.

According to an embodiment, the deep neural network is configured to receive a sequence as input data allowing for inputting a variable number n of input images including associated metadata and generating one output image representing the georeferenced 3D digital surface model.

The input sequence is therefore not only arbitrary in the type of images, e.g. optical images or radar images, but also in the number of images. The model with a sequence as input images can also be referred to as a sequence-to-sequence model, where the input sequence is any number of images and the output sequence may be one image comprising, for example an elevation model, and may be therefore more accurately a sequence-to-1 model. However, further images may be predicted such as a segmentation map as described below in more detail. In case both a georeferenced 3D digital surface model and a digital infrastructure segmentation map are output, the output may comprise at least two images. The input sequence may also be referred to as image stack. For example, the output is a digital height or elevation map, which may also be referred to as a digital elevation model. The digital height or elevation map or digital elevation model is an example of a georeferenced 3D digital surface model. According to another example, the output is a pixel matrix, where each pixel has a height value. The pixel matrix is another example of a georeferenced 3D digital surface model. In still another example, the output is a 2D building footprint map. The 2D building footprint map is an example of a digital infrastructure segmentation map. For example, the output is a height map adjusted with building footprints. Thus, the height map adjusted with building footprints is a combination of a georeferenced 3D digital surface model and a 2D building footprint map.

The generated georeferenced 3D digital surface model and/or the digital infrastructure segmentation map may be a result of one of a plurality of downstream tasks or decoding methods, resulting in the said pixel matrix but which may also result in, for example, a 3D image showing for example height in slant range, height in ground range, building footprints, or in general, a semantic structure of a city or town, including, for example, buildings and streets. Masks may be applied for buildings or non-building structures, so that a 3D town or city model is obtained. The model may comprise different levels of details, e.g. showing only footprints or contours of buildings or structures of buildings in more detail, etc. The deep neural network model takes advantage of learning structures of the surface and in particular changes and relationships in the structure that are sensed when flying over a region. The deep neural network model uses series of images under various capturing conditions. For example, the series of images under various capturing conditions may differ in one or more of geometry, date, resolution, used sensor types, and said structures or changes of the structure differ with respect to the image capturing geometry, such as position, azimuth, elevation, flight path, but also time of day, season, and other parameters, as described further below. The series contains, for example, an image taken during a flight in a first direction at a first point in time and an image taken during a flight in a second, e.g. opposite direction at a second point in time, whereby the flight path can be identical or different, or even be a flight path of a different flying object. However, a geometrical relation such as a baseline between the two images is not required. Instead of the same carrier of the image capturing device, different carriers may be used, for example a satellite for the first image and a drone for the second image. The remote sensing images that are provided to the Al model for generating the georeferenced 3D digital surface model and/or the digital infrastructure segmentation map may therefore be captured by any means, at any height and geometry, at any conditions.

In embodiments, the deep neural network model uses the attention mechanism. As the attention mechanism is related to a transformer model, it is emphasized that the deep neural network model used herein is not limited to a transformer model.

According to an embodiment, meta data is tokenized or alternatively encoded additively as a latent representation of the underlying image information for a joint processing with the least one remote sensing image in layers of the Al model.

Tokens are so-to-say information units that are output from one layer and input to the subsequent layer, usually realized as vectors, which may have a high dimension. For the input layer, the remote sensing image can be subdivided into a plurality of patches. The patches are enrolled and converted into tokens, by, for example, performing a linear matrix transformation of the pixels such that an abstract representation, i.e., vector is obtained. This operation may also be called patch embedding. The tokens contain the features of the patches. Similarly, the meta data is input via tokens, which are also referred to as metatokens in this disclosure. There may be one or more metatokens per view. The metatokens are provided in a compatible form such that they can be combined with tokens representing features of the image. For example, the values or numbers of the geometrical or other parameters are "enrolled" to vectors on which a summation or multiplication with the patch tokens could be carried out. The combination can be performed at the input layer and/or at one or more of the following layers. The output of the input layer are also tokens that are input to the following layer. Thereby, learnable linear transformations are performed. It is emphasised that the learning of the model parameters takes place via the combined tokens and not via the separate meta tokens or image tokens. Under "latent representation of the underlying image information" is understood that the meta information is encoded into the image, which again may be represented as tokens.

According to an embodiment, the Al model generates a latent representation space in which single images are represented abstractly allowing to generate a 3D surface geometry, semantic associations, or artificial image segments comprising information not available in the at least one remote sensing image.

The latent representation space can be considered as an output of a model layer containing processed image information that serves as basis for multiple downstream tasks, for example, to create the 3D surface geometry, e.g., height in slant range or ground range, semantic associations, to which also e.g. building footprints can be counted, or artificial image segments comprising information not available in the at least one remote sensing image. For example, the remote sensing image may contain shadow areas, which do not contain any information that could be used to reconstruct the surface at this area. Nevertheless, the Al model is capable to reconstruct the missing information.

According to an embodiment, the capturing geometry data of a remote image sensing device at the point of time when capturing the remote sensing image comprises an off-nadir-angle, and an azimuth angle, and geolocation information or position information.

The list of the mentioned capturing geometry data is not exhaustive. The off-nadir angle or "looking angle" defines a relation between a top view and a side view of a structure on the ground, and therefore also the degree of shadowing caused by the structure due to the looking angle. The azimuth provides an information of the direction within a plane parallel to the surface of the Earth and normal to the capturing position, e.g. the position of the camera. The azimuth angle may be defined, for example as the angle between North and a perpendicular to the flight direction.

According to an embodiment, the meta data comprises further a time stamp and/or a date of the capturing of the at least one remote sensing image, a sensor type information of the remote image sensing device, an image resolution, a signal-to-noise ratio, atmospheric conditions, an impulse response or point spread function.

The list of the mentioned meta data is not exhaustive. Using a time stamp may provide information about changes of the appearance of the surface structure in terms of, for example, time of day and information about the relation between two images and may represent additional information to the position information. For example, two images captured at nearly the same time may provide similar information of nearly the same area, where however, some objects on the ground are, for example, disposed, hidden, or have different lighting conditions due to the day of time, aerosols, etc. in the second image compared to the first image. The lighting conditions and other conditions may also influence the signal-to-noise ratio. The model may take advantage of these differences for enhancing and improving the surface model by the deep neural network model with attention. Moreover, since optical images differ from SAR images, the Al processing may be improved by associating an image with an image type corresponding to the sensor type.

According to an embodiment, the meta data further comprises one of the following or any combination thereof. In case the remote sensing training images or remote sensing images are SAR, the meta data may comprise additionally an image capturing mode indicating the way how the SAR image has been created, a wavelength, a carrier frequency or frequency band, a height information, and additional angles describing the relation between the remote image sensing device and a capturing scene. In case the remote sensing training images or remote sensing images are optical images, the meta data may comprise additionally a spectral response function, and a position of the sun expressed in azimuth and elevation, to take the shadows into account.

The list of the mentioned meta data is not exhaustive. A positive effect will be obtained in case of an input sequence comprising a geometrical series of images, which may also be referred to as a stack of images, or time series of images.

One example is a mode, which is based on a series of images where images are captured by, for example, a single sensor with the same image capturing geometry, e.g. perpendicular to the flight direction and the individual radar pulses are coherently processed into an image by means of signal processing This mode is referred to as stripmap mode. The high-resolution extremes are the various spotlight modes, in which the radar antenna observes the target coordinate for longer by being aligned slightly forwards at the beginning and then looking slightly backwards at the end of the flyby. The effect is a longer synthetic aperture, which enables a higher-resolution image. The low-resolution extreme are the various ScanSAR modes, in which the signal is divided into partial signals in both the flight and distance directions, which corresponds to splitting the bandwidths in both directions, resulting in lower-resolution images with greater spatial coverage. There may be further categories depending on, for example, the bandwidth of the SAR capturing, e.g. 300 MHz, 600 MHz or a combination of these bandwidths, the resolution or other factors. The obtained SAR images differ from each other, for example, by the following properties: scene size, slant range, azimuth resolution, and looking angle.

According to an embodiment, the Al model is capable to receive remote sensing images of both SAR image type and optical image type as input.

The Al model is capable of processing images of SAR image type and optical image type at the same time to generate the 3D georeferenced digital surface model. That is, the Al model is preferably neither trained to process only a single specific type of image nor - once trained - restricted to process a single specific type such as either an SAR image type or an optical image type. However, this does not exclude that the Al model is trained to process only a single specific type of image, e.g. SAR images or optical images. In this case, the Al model is only able to process the specific type of images on which it has been trained.

According to an embodiment, the at least one remote sensing image is captured by one or more remote image sensing devices mounted on a satellite, an airplane and/or a drone.

In principle, the remote image sensing device(s) can be mounted to any suitable flying object that is able to carry the remote image sensing devices including the necessary electronics and power supply to operate the remote image sensing devices and to transmit and/or the image data and meta data. That is, the one or more remote sensing images may be captured by one or more remote image sensing devices regardless of the type of flying object on which they are mounted. This applies to inputting a single image or a plurality of images to the deep neural network model.

According to an embodiment, the capturing geometry of each of the at least one remote sensing image is arbitrary.

For example, it is not required that the images are captured in a near Nadir-direction but can be captured at any geometry.

According to an embodiment, the at least one remote sensing image is independent of any further remote sensing image in terms of capturing time and capturing geometry.

If a second or further remote sensing image is captured, there has not to be a pre-determined time relationship or geometrical relationship between these images. The second and further images can be captured at any time and geometry regardless of the capturing time and geometry of the first image. In particular, no baseline between the capturing positions of two images is required.

According to a further aspect, there is provided a method for training an Al model configured for generating a georeferenced 3D digital surface model and/or a digital infrastructure segmentation map. The method comprises obtaining training data comprising a plurality of remote sensing images captured by a remote sensing device and meta data for each one of the at least one remote sensing image from the remote sensing device, wherein the plurality of remote sensing images are labelled with surface elevation data and/or digital infrastructure segmentation data. An example of digital infrastructure segmentation data relates to building footprints or, more generally speaking, infrastructure footprints. Moreover, the method comprises training the Al model based on the training data.

In the context of the above training method, the labelled remote sensing images including the metadata may also be referred to as remote sensing training images. Similarly, the meta data associated with the respective remote sensing images may also be referred to as meta training data.

Consequently, using such a training method, an Al model can be provided which his configured to generate a georeferenced 3D digital surface model and/or a digital infrastructure segmentation map as has been explained above. The remote sensing images of the training data may for example be optical images or SAR images. LiDAR can also be used for obtaining labels, e.g. height information or elevation information. Altogether, the training allows to provide a flexible and accurate Al model.

According to a further aspect, there is provided a data processing apparatus comprising means for carrying out the method of any one of the preceding aspects. This means that the data processing apparatus may comprise means for carrying out the method for generating a georeferenced 3D digital surface model and/or the digital infrastructure segmentation map, and/or the method for training the Al model. Using such a data processing apparatus, a georeferenced 3D digital surface model and/or a digital infrastructure segmentation map may be provided in a flexible and accurate manner.

According to a further aspect, there is provided a computer program comprising instructions which, when the computer program is executed by a computer, cause the computer to carry out the method of any one of the preceding aspects. This means that the computer program may comprise instructions which cause the computer to carry out the method for generating a georeferenced 3D digital surface model and/or a digital infrastructure segmentation map, and/or the method for training the Al model. Using such a computer program, a georeferenced 3D digital surface model and/or a digital infrastructure segmentation map may be provided in a flexible and accurate manner.

According to a further aspect, there is provided a computer-readable storage medium comprising instructions which, when executed by a computer, cause the computer to carry out the method of any of the preceding aspects. This means that the computer-readable storage medium may comprise instructions which cause the computer to carry out the method for generating a georeferenced 3D digital surface model and/or a digital infrastructure segmentation map, and/or the method for training the Al model. Using such a computer-readable storage medium, a georeferenced 3D digital surface model and/or a digital infrastructure segmentation map may be provided in a flexible and accurate manner.

According to a further aspect, a sensor arrangement for generating a georeferenced 3D digital surface model and/or a digital infrastructure segmentation map is provided. The sensor arrangement comprises at least one remote image sensing device, and a data processing apparatus according to the invention. The data processing apparatus is communicatively connected to the remote image sensing device. Thus, the data processing apparatus is configured to run an Al model trained with remote sensing training images along with meta training data related to respective training images, receive at least one remote sensing image captured by the by the at least one remote image sensing device, receive meta data comprising capturing geometry data for each one of the at least one remote sensing image from the at least one remote image sensing device, input the at least one remote sensing image and their corresponding meta data to the Al model, and process the at least one remote sensing image and their corresponding meta data using the Al model, wherein the Al model generates the 3D georeferenced digital surface model.

As already mentioned above, the at least one remote image sensing device may be any device for capturing images such as an optical device, for example, a camera or an SAR sensor. The sensor arrangement may comprise remote image sensing devices of different such types. Furthermore, the remote image sensing devices may be mounted on any and on different flying objects such as satellites, airplanes, drones, etc.

According to an embodiment, the at least one remote image sensing device is configured to capture one or more remote sensing images, record meta data for each captured remote sensing image, and transmit the one or more remote sensing images and the meta data for each captured remote sensing image to the data processing apparatus.

The remote image sensing device may thus comprise more elements than merely an image sensor. For example, the remote image sensing device may comprise an integrated GNSS sensor, an inertial sensor, a data transmitter and a microcontroller or may be defined to be a device consisting of several separated single devices such as GNSS sensor, inertial sensor, local data processing apparatus, transmitter, etc. that are connected to each other.

According to an embodiment, the at least one remote image sensing device is an optical sensor or an SAR sensor.

As explained above in more detail, the data source for the image data and meta data can be arbitrary.

These and other features, aspects and advantages of the present invention will become better understood with reference to the accompanying figures and the following description.

### BRIEF DESCRIPTION OF THE DRAWINGS

Fig. 1a illustrates a diagram of a side view of a scenario and a definition of the viewing angle.
Fig. 1b illustrates a geometrical definition of the azimuth angle.
Fig. 2a shows a diagram of a first image capturing mode.
Fig. 2b shows a diagram of a second image capturing mode.
Fig. 3 shows a diagram of an Al model.
Fig. 4 shows a flow diagram of a method for generating a georeferenced 3D digital surface model and/or a digital infrastructure segmentation map.
Fig. 5 shows a diagram of a sensor arrangement for generating a georeferenced 3D digital surface model and/or a digital infrastructure segmentation map.

### DETAILED DESCRIPTION OF THE INVENTION

Corresponding parts are provided with the same reference symbols in all figures.

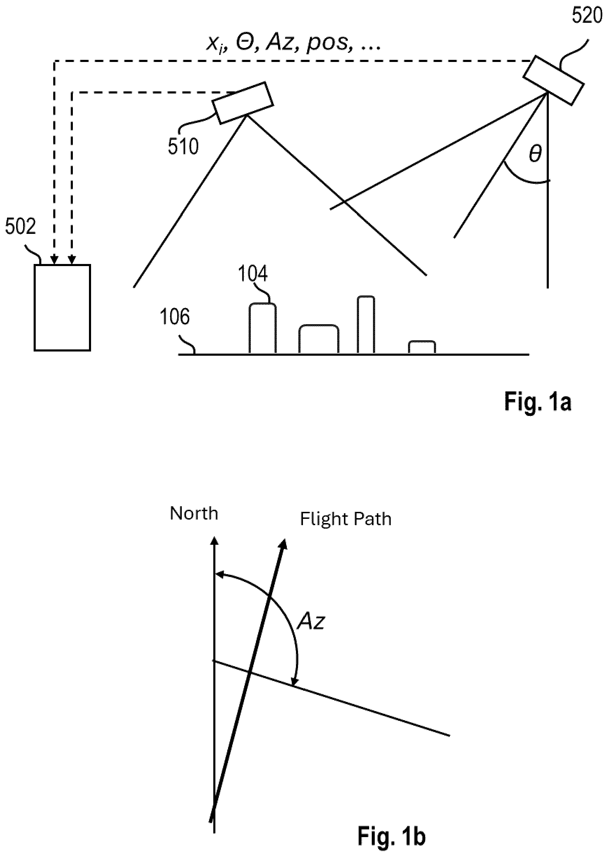

Fig. 1a shows a diagram of a side view of a scenario in which two remote sensing devices 510 and 520 are capturing images of a ground 106 with structures 104 such as buildings, trees, elevations, etc. The sensing device 510 may be mounted, for example on a first type of carrier such as a satellite and the sensing device 520 may be mounted, for example on a second type of carrier such as an airplane. Further, the sensing device 510 may be, for example, a first type of image sensing device such as a camera, and the sensing device 520 may be, for example, a second type of image sensing device such as a SAR sensor. Moreover, the sensing device 510 may, for example, capture the first image at a first point of time, and the sensing device 520 may, for example, capture the second image at a second point of time different from the first point of time. The first and second sensing devices 510, 520, transmit the captured images *v* as well as meta data such as the viewing angle *θ*, the azimuth angle Az, their position and possibly further geometrical or camera specific parameters to a data processing apparatus 502 on which the Al model described herein is run.

Fig. 1a shows further the definition of the viewing angle *θ*, which is defined as the angle between a perpendicular to the earth's surface and a main detection direction of the remote sensing devices 510, 520.

Fig. 1b shows a diagram of the definition of the azimuth angle Az, which is defined as the angle between North and a perpendicular to the flight direction.

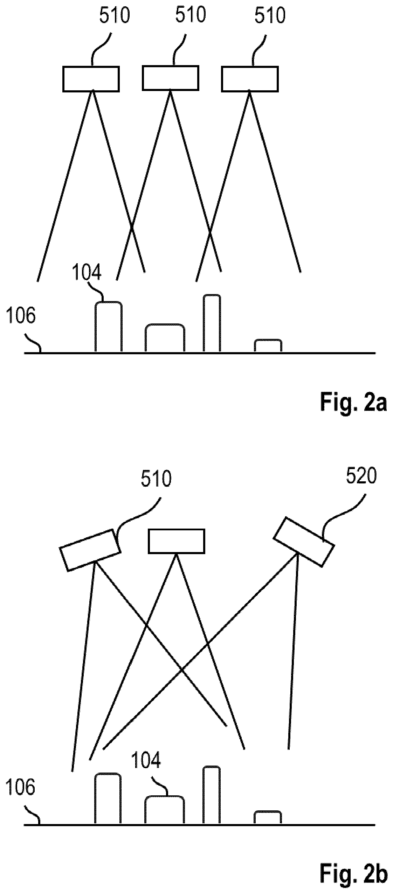

The mode types shown in Fig. 2a and 2b are image capturing modes typically used for generating an SAR image. The mode type may also be an input to the data processing apparatus 502 and to the Al model.

Fig. 2a shows a diagram of a first image capturing mode type, which is also known, for example, as stripmap mode, where the radar antenna is arranged at right angles to the direction of flight.

Fig. 2b shows a diagram of a further image capturing mode, which is referred to as spotlight mode. In the spotlight mode, the radar antenna observes the target coordinate for longer by being aligned slightly forwards at the beginning and then looking slightly backwards at the end of the flyby, effecting a longer synthetic aperture, which enables a higher-resolution image. This mode can be further subclassified, for example depending on the resolution, noise, etc.

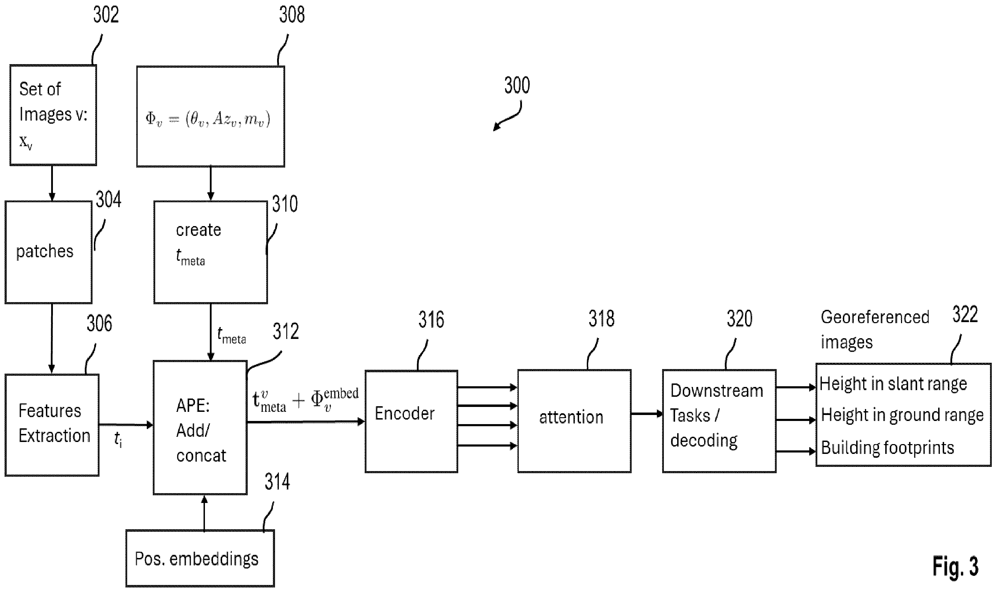

Fig. 3 shows a diagram of an Al model 300, which may also be referred to as "Al system" 300 or, in the example of Fig. 3, "transformer" 300. It is noted that Fig. 3 shows only one possible architecture as an example. Other implementations, also non-transformer architectures, are possible. In general, essential characteristics of transformers are that they comprise a series of encoders followed by a series of decoders, and that so-called attention mechanisms are applied instead of recurrent structures. However, the Al model proposed in this disclosure may alternatively be based on non-transformer architectures, e.g. recurrent structures without attention.

In general, a transformer converts the input sequence into a vector representation by an embedding layer, with the weights of the embedding layer being adjusted during training. Positional encoding allows the model to uniquely identify the positional origin of a token within the image. The input sequence is passed to a series of encoders such as encoder 316 in the vector representation and converted into an internal representation. This internal representation is characterised by its abstract interpretation of the input sequence. The decoders such as decoder 320 then translate this internal representation into an output sequence. In the case of the transformer 300 of this disclosure, the output sequence consists of a single image. The input sequence of arbitrary length is processed in batches. The encoder 316 may be constituted by a self-attention module and a feedforward module, while the decoder 320 may consist of a self-attention module, an encoder-decoder-attention module and a feedforward module.

Referring again to the exemplary transformer 300 shown Fig. 3, one or more SAR images (acquisitions / views) of the same geographical area on the Earth's surface are captured under different observing geometries and capturing modes. The images do not require phase information and can therefore be pure 2D-images. Within the Al model, representations of the image and geometric data are generated that can be used for downstream tasks such as height reconstruction, object detection, or semantic segmentation. In more detail, as shown in Fig. 3, a classic vision transformer framework may be used as an encoder network in order to process the set of images x*_{υ}*, along with the acquisition parameters {Φ*_{υ}*}. An image ("view") v, or a set of images x*_{υ}*, captured by a remote sensing device 510, 520, is received as input 302 to the Al model 300. The image 302 is divided into patches 304. The patches are enrolled and represented as vectors, from which the patch features are extracted in block 306. An *Nₚ* × *Nₚ* patch pattern per view is generated, which, after linear embedding into the latent dimension d, leads to ${t}_{i}^{v}$ tokens, where i indicates the position within the image and v the corresponding originating view. As second input 308 serve the acquisition parameters and/or further parameters such viewing angle *θ*, the azimuth angle *Az,* and the acquisition mode m, which are referred to herein as metadata. As an example, the acquisition mode m encodes the index (0, 1, 2, 3) of four acquisition modes, for example, stripmap mode, two spotlight modes with different resolutions and ScanSAR with low resolution. The values of these parameters are input as a set Φ*_{υ}* = (*θ_{υ}*), *Az_{υ}, m_{υ}*), from which learnable metatokens ${t}_{meta}^{v} ∈ {ℝ}^{d}$ are generated in block 310. To incorporate the acquisition parameters Φ*_{υ}* into the encoder network 316, a linear layer *f*_{aqu} is utilised, which transfers pre-processed acquisition parameters Φ*_{υ}* into the latent dimension d of the model: ${f}_{aqu} : {ℝ}^{4} \to {ℝ}^{d} , {Φ}_{v}^{embed} = {f}_{aqu} \left({Φ}_{v}^{pre}\right)$ where processing is given by: ${Φ}_{v}^{pre} = \left(cos\left(Az\right),sin\left(Az\right),1/tan\left(θ\right),m\right) .$

**Positional** embeddings 314 are added to the input token embeddings to provide the model with information about the positions of the tokens in the Acquisition Parameter Encoding (APE) block 312, i.e., the position of each token is encoded in the image through the addition of learnable positional encoding vectors. The corresponding embedded view parameters are added to the metatokens ${t}_{meta}^{v} ∈ {ℝ}^{d}$ for each view v, resulting in the combined tokens ${t}_{meta}^{v} + {Φ}_{v}^{embed}$. The input to the transformer backbone for a two-view input is hence given by 2 × *Nₚ* × *Nₚ* image tokens and 2 metatokens. In this disclosure, this step is referred to as the acquisition parameter encoding (APE). Alternatively, the embedded acquisition parameters, ${Φ}_{v}^{embed}$, may be added directly to the image tokens or expanding them through concatenation.

That is, the tokens Φ*_{υ}*, ${t}_{i}^{v}$ and the positioning embeddings are joint together in block 312, which outputs the tokens ${t}_{meta}^{v} + {Φ}_{v}^{embed}$ that are fed into encoder 316. It is emphasized that, regarding the learning, there are no separate channels for the views or for the metadata, but the weights in the Al model are learnt for the joint tokens ${t}_{meta}^{v} + {Φ}_{v}^{embed}$. Attention 318 is applied to the output of the preferably sequence-to-1 encoder in case of a single output or sequence-to-k encoder otherwise, which allows it to scale more efficiently and more elegant to multi-view settings compared to traditional convolutional architectures. It is noted that in a case in which both a georeferenced 3D digital surface model and a digital infrastructure segmentation map are output, k equals 2. This adaptability is particularly advantageous in scenarios where multi-acquisition or temporal sequences are required to capture diverse perspectives of a scene. However, the architecture allows as well for processing single images as input. In particular, by involving the meta data including the acquisition parameters Φ*_{υ}*, the Al model 300 is capable of processing images captured in various angles, where no geometrical or time relation to other images needs to be known. In particular, the model 300 is able to perform a 3D reconstruction using just a single 2D image. To do this, it uses some of the laws of a landscape that were implicitly trained during the training of the neural network. These so-called 'monocular cues', which are also used by humans in visual perception, include typical proportions of certain structures and the interplay of light and shadow. The deep neural network used is also designed in such a way that it can process several individual images simultaneously and thus increase the accuracy of the resulting 3D reconstruction if necessary. The decoding 320 may comprise multiple downstream tasks that generate different outputs 322 such as georeferenced images showing the height in slant range, the height in ground height or footprints of buildings.

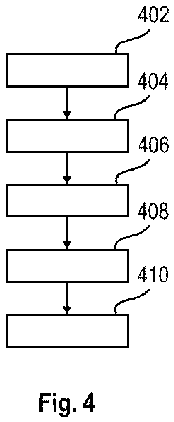

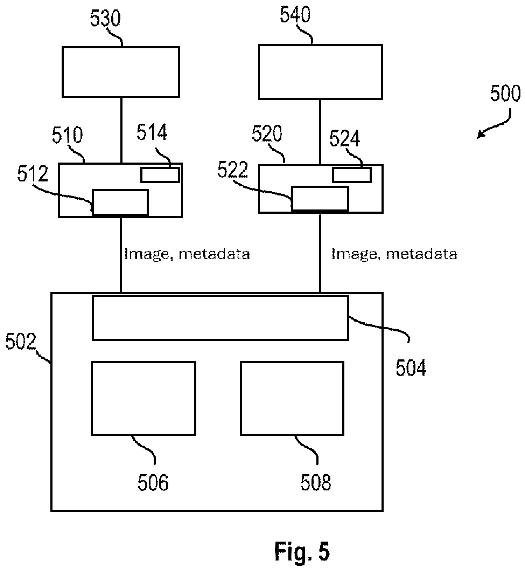

Fig. 4 shows a flow diagram of a method 400 for generating a georeferenced 3D digital surface model and/or a digital infrastructure segmentation map. Fig. 4 is described in combination with Fig. 5 further below.

Fig. 5 shows a diagram of a sensor arrangement 500 for generating a georeferenced 3D digital surface model and/or a digital infrastructure segmentation map. The sensor arrangement 500 comprises a data processing apparatus 502 containing a receiver 504, a microcontroller 506, and a memory 508. The sensor arrangement 500 further comprises a first capturing sensor 510 with a first transmitter 512 and a second capturing sensor 520 with a second transmitter 522. The connection between the transmitters 512, 524 and the receiver 504 may be realized in a wired or wireless way. The second capturing sensor 520 and further capturing sensors, which are not shown in Fig. 5, are optional. Capturing sensor 510 may, for example, be a camera mounted on an airplane that captures optical images, and capturing sensor 520 may, for example, be an SAR sensor on a satellite that provides SAR images. The sensors may optionally further comprise memories 514, 524 to record image and meta data. Moreover, sources 530, 540 for meta data are shown. These sources 530, 540 may be, for example, GNSS sensors, INS sensors, memories that contain geometric calibration values of the local position and orientation of the image capturing devices, i.e., capturing sensors 510 and 520.

With reference to Figs. 4 and 5, the method 400 comprises the following steps:

In a first step 402, an Al model 300 trained with remote sensing training images and meta training data that comprise at least capturing geometry data is provided. The Al model 300 in this example is a Deep Neural Network model of sequence-to-k type with attention, where k is an integer that may also be one. The meta training data may additionally comprise a time stamp, position data, sensor type and/or an image capturing mode. An extended list of possible meta training data parameters, which also applies to the meta data in the non-training case is given further below. The meta data may be received from the meta data sources 530, 540, or may at least partially already stored in memory 514, 524. The Al model 300 is stored in memory 508 and is executed by microcontroller 506. In a second step 404, at least one remote sensing image is captured by remote sensing device 510 or additionally by the remote sensing device 520. The transmitters 512, 522 transmit the at least one image and additional meta data to the data processing apparatus 502, which is received by receiver 504 in the third step 406. Alternatively, the image data and meta data may be stored in memories 514, 524 and provided to the Al model 300 at a later point of time. Like the meta training data, the meta data may in addition to the capturing geometry data comprise a time stamp, position data, sensor type and/or an image capturing mode. The receiver 504 receives 406 the image data and meta data from the remote sensing devices 510, 520. The microcontroller 506 uses the received and stored image and meta data as input 408 for the Al model 300 and processes 410 the at least one remote sensing image and their corresponding meta data by executing the Al model 300, thereby generating the 3D georeferenced digital surface model.

The metadata may contain sensor independent geographical parameters, SAR-specific parameters and/or specific parameters for optical images. Examples of parameters are listed in more detail in the following:

Geographical parameters (sensor-independent):
- Season or date of recording. These parameters consider the different appearance of the image scene of the earth's surface, e.g. the landscape, at different times of the year, e.g. summer and winter.
- Atmospheric conditions such as aerosol concentration in the atmosphere.
- Geolocation, that is the position of the data, which may be given, for example, as longitude and latitude. For example, the current position of the flying object may be detected using, for example, a GNSS (Global Navigation Satellite System) sensor or other suitable means, and the current orientation may also be available by GNSS sensors and/or inertial sensors as known to a skilled person. The target area geolocation data may be derived therefrom.
- Recording time. If applicable, these parameters may consider the difference between morning and afternoon, or certainly between night and day.

### SAR-specific parameters:

- Recording mode of an SAR image, such as stripmap mode, spotlight mode, scanSAR mode etc.
- Wavelength/carrier frequency or frequency band such as X-band, L-band etc.
- Azimuth angle. The azimuth angle corresponds to the flight direction of the sensor. The viewing direction is orthogonal to flight direction.
- Off-nadir angle. The off-nadir angle is the viewing angle in the distance plane. Sometimes, it is also called incidence angle.
- Spatial resolution.
- Additional angles that describe the sensor/scene ratio, especially for fixed spot mode images with very large synthetic apertures.
- Impulse response or point spread function.
- Signal-to-noise ratio.

### Optics-specific parameters:

- Off-nadir angle, which is - similarly to SAR - the viewing angle in the distance plane
- Resolution
- Spectral response function. The spectral response function defines how sensitive the individual spectral channels of the sensor are to the areas of the electromagnetic spectrum in the visible and infrared light range.
- Position of the sun. This position may be represented, for example, by the azimuth and the elevation angle.
- Impulse response / point spread function.
- Signal-to-noise ratio.

The invention enables geometric surface reconstruction with the aid of remote sensing image data. Whereas previously stereo image pairs, i.e. images that exactly matched each other and whose recording locations were separated by a spatial baseline, were always necessary for surface reconstruction, a single image is now sufficient. The present invention makes this approach even more flexible, finally providing an operational alternative to existing stereo methods.

Other variations to the disclosed embodiments can be understood and effected by those skilled in the art in practicing the claimed invention, from the study of the drawings, the disclosure, and the appended claims. In the claims, the word "comprising" does not exclude other elements or steps and the indefinite article "a" or "an" does not exclude a plurality. A single processor or other unit may fulfil the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### Acronyms

- Al: Artificial Intelligence
- APE: Acquisition Parameter Encoding
- GNSS: Global Navigation Satellite System
- INS: Inertial Navigation System
- LiDAR: Light Detection and Ranging
- NN: Neural Network
- SAR: Synthetic Aperture Radar
- 2D, 3D: 2-dimensional, 3-dimensional

### Reference Numerals

- 104: structure on surface
- 106: ground
- 300: Al model / transformer
- 302...322: Blocks of the Al model / transformer
- 400: method for generating a georeferenced 3D digital surface model and/or a digital infrastructure segmentation map
- 402...410: method steps
- 500: sensor arrangement for generating a georeferenced 3D digital surface model and/or a digital infrastructure segmentation map
- 502: data processing apparatus
- 504: receiver
- 506: microcontroller
- 508: memory
- 510: first remote image sensing device / capturing sensor
- 512: transmitter of first remote image sensing device / capturing sensor
- 514: memory in first remote image sensing device / capturing sensor
- 520: second remote image sensing device / capturing sensor
- 522: transmitter of second remote image sensing device / capturing sensor
- 524: memory in second remote image sensing device / capturing sensor
- 530, 540: meta data sources, for example, GNSS sensors, INS sensors, memories with calibration data

## Claims

1. A method for generating a georeferenced 3D digital surface model and/or a digital infrastructure segmentation map; comprising the steps:
obtaining (404) at least one remote sensing image captured by a remote sensing device;
obtaining (406) meta data for each one of the at least one remote sensing image from the remote sensing device;
inputting (408) the at least one remote sensing image and their corresponding meta data to an Al model (300) trained with remote sensing training images along with meta training data related to respective training images;
processing (410) the at least one remote sensing image and their corresponding meta data by the Al model (300), wherein the Al model (300) generates the 3D georeferenced digital surface model and/or the digital infrastructure segmentation map.

2. The method according to any one of the previous claims, wherein the Al model is a deep neural network.

3. The method according to claim 2, wherein the deep neural network is configured to receive a sequence as input data allowing for inputting a variable number n of input images including related meta data and generating one output image representing the georeferenced 3D digital surface model and/or the digital infrastructure segmentation map.

4. The method according to any one of the previous claims, wherein the meta data is tokenized or alternatively encoded additively as a latent representation of the underlying image information for a joint processing with the least one remote sensing image in layers of the Al model.

5. The method according to any one of the previous claims, wherein the Al-model generates a latent representation space in which single images are represented abstractly allowing to generate a 3D surface geometry, semantic associations, or artificial image segments comprising information not available in the at least one remote sensing image.

6. The method according to any one of the previous claims, wherein the meta data comprises capturing geometry data of a remote image sensing device at the point of time when capturing the remote sensing image comprising an off-nadir-angle, and an azimuth angle, and geolocation information.

7. The method according to any one of the previous claims, wherein the meta data comprises further one or any combination of: a time stamp and/or a date of the capturing of the at least one remote sensing image, a sensor type information of the remote image sensing device, an image resolution, a signal-to-noise ratio, atmospheric conditions, an impulse response or point spread function.

8. The method according to any one of the previous claims, wherein the Al model is adapted to receive remote sensing images of both SAR image type and optical image type as input.

9. The method according to any of the previous claims, wherein the at least one remote sensing image is captured by one or more remote image sensing devices mounted on a satellite, an airplane, and/or a drone.

10. The method according to any one of the previous claims, wherein the meta data further comprises one or any combination of:
in case the remote sensing training images or remote sensing images are SAR images:
an image capturing mode indicating the way how the SAR image has been created,
a wave length, carrier frequency or frequency band,
additional angles describing the relation between the remote image sensing device and a capturing scene;
a height information;
in case the remote sensing training images or remote sensing images are optical images.
a spectral response function,
position of the sun expressed in azimuth and elevation.

11. A method for training an Al model configured for generating a georeferenced 3D digital surface model and/or a digital infrastructure segmentation map, the method comprising
obtaining training data comprising a plurality of remote sensing images captured by a remote sensing device and meta data for each one of the at least one remote sensing image from the remote sensing device, wherein the plurality of remote sensing images are labelled with surface elevation data and/or digital infrastructure segmentation data;
training the Al model based on the training data.

12. A data processing apparatus comprising means for carrying out the method of any one of the preceding claims.

13. A computer program comprising instructions which, when the program is executed by a computer, cause the computer to carry out the method of claims 1 to 11.

14. A computer-readable storage medium comprising instructions which, when executed by a computer, cause the computer to carry out the method of claims 1 to 11.

15. A sensor arrangement (500) for generating a georeferenced 3D digital surface model and/or a digital infrastructure segmentation map, comprising at least one remote image sensing device (510, 520), and a data processing apparatus (502) according to claim 12,
wherein the data processing apparatus (502) is communicatively connected to the at least one remote image sensing device.
